# EUROPÄISCHE PATENTANMELDUNG

(11) **EP 1 288 553 A1**
(43) Veröffentlichungstag der Anmeldung: **05.03.2003**
(21) Anmeldenummer: 02019279.5
(22) Anmeldetag: 28.08.2002
(51) Int. Cl.: F16L 11/127, H02B 11/22, H01B 7/00, G02B 6/44, B25J 19/00

(54) **Versorgungskabel mit Fluid-, Strom und Lichtwellenleitungen für einen Industrieroboter**

(30) Priorität: 29.08.2001 DE 20114231 U
(71) Anmelder: Leoni Protec Cable Systems GmbH, 98574 Schmalkalden (DE)
(72) Erfinder: Die Erfindernennung liegt noch nicht vor
(74) Vertreter: Tergau & Pohl Patentanwälte

(57) **Zusammenfassung**

Ein Versorgungskabel (10), insbesondere für einen Industrieroboter, welcher mit elektrischem Strom und mit einem Fluid als Arbeitsmedium versorgbar ist, und dessen eigene und/oder diejenigen Antriebs- und Versorgungssysteme, die für das an seiner Roboterhand vorhandene Werkzeug jeweils zur Verfügung stehen, mittels elektrischer Leitungen und/oder Lichtwellenleiter ansteuerbar sind, weist
- eine Fluid-Leitung (12),
- zumindest eine elektrische Leitung (24,26,28,30,32),
- zumindest einen Lichtwellenleiter (20,22),
- zumindest einen zwischen der elektrischen Leitung (24,26,28,30,32) und dem Lichtwellenleiter (20,22) angeordneten strangförmigen Füllkörper (34)
auf.

## Beschreibung

Die Erfindung betrifft ein Versorgungskabel, insbesondere für einen Industrieroboter, nach dem Oberbegriff des Anspruchs 1, einen Steckverbinder für das Versorgungskabel und einen Industrieroboter mit dem Versorgungskabel, insbesondere einen mehrachsigen Industrieroboter, der mit elektrischem Strom und einem Fluid wie Druckluft, Wasser, Öl oder unter einem Unterdruck stehenden Gas versorgt wird und dessen eigene und/oder diejenigen Antriebs- und Versorgungssysteme, die für das an seiner Roboterhand vorhandene Werkzeug jeweils zur Verfügung stehen, mittels elektrischer Leitungen und/oder Lichtwellenleiter ansteuerbar sind.

Bekannte Versorgungsleitungen sind jeweils einzeln als elektrische Kabel, Schläuche für ein Medium wie Druckluft, Wasser oder Öl und auch als Lichtwellenleiter bekannt. Diese einzelnen Leitungen werden entweder innerhalb des Roboters geführt, oder sie werden außerhalb desselben und dann geschützt in einem Hüllschlauch verlegt. Das Ausstatten eines Industrieroboters mit den für ihn vorgesehenen Leitungen macht die Handhabung mit unterschiedlichen Leitungen und Kabeln erforderlich, in Abhängigkeit von dem am Roboter vorhandenen Werkzeug. Dies bedingt auch eine entsprechend große Lagerhaltung der verschiedenen Leitungen und Kabel sowie der für diese Leitungen und Kabel vorgesehenen Anschlusstechnik.

Ausgehend von diesem Stand der Technik liegt der Erfindung die Aufgabe zu Grunde, die Versorgung eines Industrieroboters der eingangs genannten Art möglichst wirtschaftlich zu gestalten. Diese Erfindung ist durch die Merkmale der unabhängigen Ansprüche gegeben. Sinnvolle Weiterbildungen der Erfindung sind Gegenstand von sich an die unabhängigen Ansprüche anschließenden weiteren Ansprüchen.

Das erfindungsgemäße Versorgungskabel zeichnet sich dadurch aus, dass in diesem zumindest eine Fluid-Leitung, insbesondere Druckluft- oder Hydraulik-Leitung, zumindest eine elektrische Leitung, zumindest ein Lichtwellenleiter und zumindest ein zwischen der elektrischen Leitung und dem Lichtwellenleiter angeordneter strangförmiger Füllkörper vorhanden sind. Mit einem solchen Versorgungskabel können die für den Betrieb eines Roboters bzw. seines Werkzeuges benötigten unterschiedlichen Energiearten vollständig zur Verfügung gestellt werden. Es braucht damit nur ein solches Versorgungskabel für die Ausstattung eines Industrieroboter mit Versorgungsleitungen lagermäßig vorrätig gehalten zu werden.

Die erfindungsgemäße Versorgungsleitung ist eine Hybridleitung. Verschiedene Hybridleitungen mit einer Fluid-Leitung, insbesondere Druckluft-Leitung, einer elektrischen Leitung und einem Lichtwellenleiter sind an sich im Stand der Technik bekannt, jedoch nicht in der erfindungsgemäßen Ausgestaltung mit einem zwischen Strom- und Lichtwellenleiter angeordneten strangförmigen Füllkörper. Des Weiteren ist noch kein Hybridkabel bei einem Industrieroboter der eingangs genannten Art zum Einsatz gekommen.

So ist beispielsweise aus der US-A 5,362,921 ein Unterseekabel bekannt, das eine Hybridleitung darstellt. Durch dieses Kabel können Flüssigkeiten oder Gase transportiert werden. Das Kabel kann darüber hinaus auch elektrische oder optische Leiter aufnehmen. Auch aus der US-A 6,046,404 ist ein solches vergleichbares Unterseekabel bekannt.

Des Weiteren ist aus der DE 297 09 748 U1 ein Energieleiter zur Übertragung von Steuersignalen und Speiseenergiesignalen bekannt. Dieser Hybridleiter besitzt einen druckfesten Schlauch. Im Inneren des Schlauches sind parallel geführte elektrische Leiteradern zur Übertragung elektrischer Energie und Signale oder auch Lichtleiteradern vorhanden. Diese Leiteradern sind von einer isolierenden Hülle umgeben, die einstückig mit der Schlauchwandung verbunden ist. Der Schlauch besitzt dadurch rippenartige Kragwände, wobei in jeder Kragwand eine Leiterader vorhanden ist. Die Biegeverhältnisse dieses Hybridleiters sind richtungsabhängig unterschiedlich, je nach Anordnung dieser Kragwände. Bereits deshalb eignet sich ein solcher Energieleiter nicht als Versorgungsleitung bei einem Industrieroboter, bei dem vergleichbare Biegeverhältnisse seiner Leitungen in allen Richtungen vorhanden sein müssen.

Als vorteilhaft hat sich herausgestellt, zumindest eine Fluid-Leitung, insbesondere Druckluft- oder Hydraulik-Leitung, im Kabelzentrum vorzusehen. Unter dem Begriff Fluid-Leitung ist hierbei auch eine Vakuum-Leitung umfasst. Diese Fluid-Leitung für ein Arbeitsmedium ist von einem Leitungskranz konzentrisch umgeben. In diesem Leitungskranz ist zumindest eine elektrische Leitung und zumindest ein Lichtwellenleiter vorhanden.

Zwischen dieser zumindest einen elektrische Leitung und dem zumindest einen Lichtwellenleiter ist zumindest ein strangförmig ausgebildeter Füllkörper vorhanden. Außen ist der Leitungskranz bevorzugt von einer Schutzschicht umgeben. Die im Leitungskranz vorhandenen unterschiedlichen Leitungen sowie leitungsähnlich ausgebildeten Füllkörper haben vorzugsweise den gleichen Außendurchmesser.

Es hat sich als vorteilhaft herausgestellt, den einen oder die mehreren Lichtwellenleiter umfangsmäßig in der einen Umfangshälfte des Leitungskranzes und den einen oder die mehreren elektrischen Leitungen umfangsmäßig auf der anderen gegenüberliegenden Umfangshälfte anzuordnen. Dadurch können für die Lichtwellenleiter größere Bögen als für die elektrischen Leitungen im Bereich eines winklig angeschlossenen Steckverbinders, in der das Versorgungskabel endet, vorgesehen werden. Ausführungsbeispiele für solche Steckverbinder sind in der Zeichnung dargestellt.

Spezielle vorteilhafte Ausgestaltungen für solche Versorgungskabel sind den in den Ansprüchen ferner angegebenen Merkmalen sowie einem auch in der Zeichnung dargestellten Ausführungsbeispiel zu entnehmen.

Der für das Versorgungskabel vorgesehene Steckverbinder dient gleichzeitig als Anschlussstelle für die eine oder die mehreren elektrischen Leitungen, für den einen oder die mehreren Lichtwellenleiter und für die Fluid-Leitung. Einzelheiten dazu sind den Ausführungsbeispielen zu entnehmen.

Weitere Vorteile und Merkmale der Erfindung sind den in den Ansprüchen ferner angegebenen Merkmalen sowie den nachstehenden Ausführungsbeispielen zu entnehmen.

Die Erfindung wird im Folgenden anhand der in der Zeichnung dargestellten Ausführungsbeispiele näher beschrieben und erläutert. Es zeigen:
- Fig. 1: einen Querschnitt durch ein bei einem Industrieroboter vorhandenes erfindungsgemäßes Versorgungskabel,
- Fig. 2: einen Schnitt durch einen bei dem Versorgungskabel nach Fig. 1 endseitig vorhandenen Steckverbinder, bei gerader Anschlussrichtung des Versorgungskabels in den Steckverbinder hinein,
- Fig. 3: in einer Draufsicht den Steckverbinder nach Fig. 2,
- Fig. 4: eine Fig. 2 vergleichbare Darstellung bei abgeknickter Leitungsführung des Versorgungskabels in einen Steckverbinder hinein,
- Fig. 5: in einer ausschnittsweisen Draufsicht den Steckverbinder nach Fig. 4.

Ein Versorgungskabel 10 für einen mehrachsigen Industrieroboter besitzt einen zentralen Druckluftschlauch 12 als Fluid-Leitung mit der Nennweite von im vorliegenden Beispielsfall ½Zoll. Der Mantel 14 dieses Druckluftschlauches 12 besteht aus einer Gummimischung und besitzt eine äußere Karkasse 16 aus einem Geflecht aus Textilgarn-Fäden.

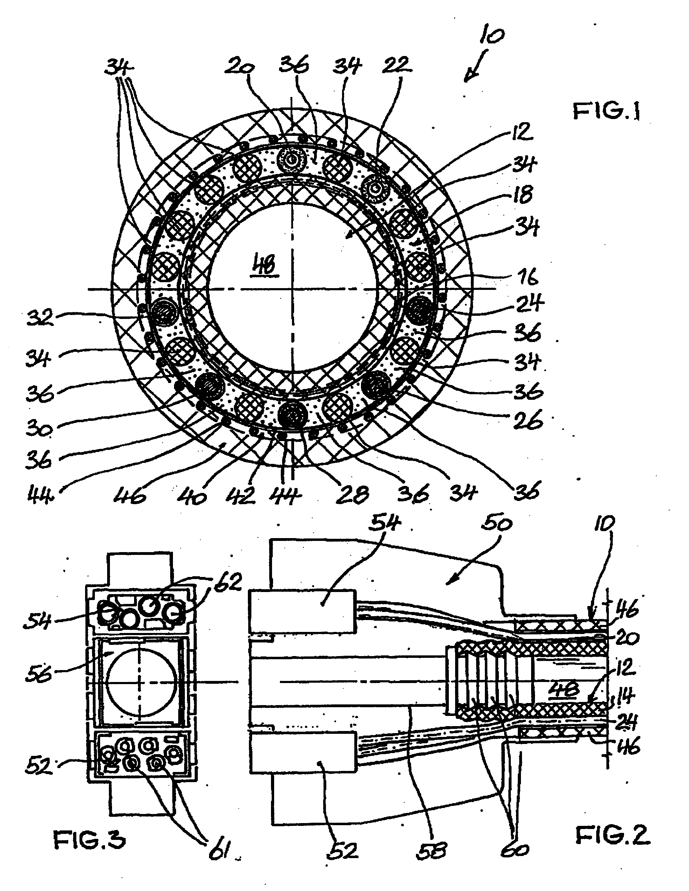

Der Druckluftschlauch 12 ist von einem Leitungskranz 18 konzentrisch umgeben. In der- bezogen auf Fig. 1 - oberen Hälfte sind im Leitungskranz 18 zwei Lichtwellenleiter 20,22 enthalten. Auf der - bezogen auf die Fig. 1 - unteren Hälfte besitzt der Leitungskranz 18 fünf elektrische Leitungen 24,26,28,30,32. Zwischen jeweils zwei dieser elektrischen Leitungen ist ein strangförmiger Füllkörper 34 vorhanden. Ein solcher Füllkörper 34 ist auch zwischen den beiden Lichtwellenleitern 20,22 vorhanden. Darüber hinaus sind mehrere nebeneinander liegende Füller oder Füllkörper 34 zwischen dem Lichtwellenleiter 20 und der elektrischen Leitung 32 sowie zwischen dem Lichtwellenleiter 22 und dem elektrischen Leiter 24 vorhanden.

Die Lichtwellenleiter 20,22 bestehen aus Kunststofffasern wie Polymethylmethacrylat (PMMA)-Fasern. Der Außendurchmesser der beiden Lichtwellenleiter beträgt jeweils 2,22 mm. Jeder elektrische Leiter 24,26,28,30,32 besteht aus isolierten Kupferadern mit einem Leitungsquerschnitt von 1,5 Quadratmillimetern. Im vorliegenden Fall sind fünf solcher Kupferadern jeweils vorhanden. Die Kupferadern sind von einer Isolierschicht in Gestalt von dünnwandigen Spezialelastomeren oder Polyolefinen umgeben. Die Isolierschicht der Kupferadern trägt eine Farbkennzeichnung zur besseren Identifizierung der einzelnen Kupferadern. Der Durchmesser jeder der elektrischen Leitungen 24,26,28,30,32 beträgt im vorliegenden Beispielsfall 2,18 mm. Jeder der Füllkörper 34 besteht aus einer Kunststoffmischung. Der Durchmesser jedes Füllkörpers 34 beträgt 2,2 mm. Die in dem Leitungskranz vorhandenen Leitungen 20,22,24,26,28,30,32 sowie Füllkörper 34 besitzen damit alle praktisch den gleichen Außendurchmesser. Die Zwischenräume 36 zwischen den einzelnen Leitungen 20,22,24,26,28,30,32 des Leitungskranzes 18 können mit das Verrutschen dieser einzelnen Leitungen 20,22,24,26,28, 30,32 verhindernden Füllstoffen, beispielsweise Fetten oder Gelen, ausgefüllt sein. Ein Verrutschen der Leitungen 20,22,24,26,28,30,32 verhindern insbesondere die auch als Kranzleitungen bezeichneten strangförmigen Füllkörper 34, welche ihrerseits von Füllstoffen innerhalb des Leitungskranzes 18 umgeben sein können. Die Füllstoffe bewirken ferner eine verbesserte Abdichtung des Versorgungskabels 10.

Der Leitungskranz 18 ist von einem Außenmantel 40 umgeben. Der Außenmantel 40 besitzt eine innere Bandagierung 42, die von einem als Kevlar-Geflecht ausgebildeten Kunststofffaser-Geflecht 44 umgeben ist. Der Außenmantel 40 besitzt damit einen hohen Dehnungswiderstand, eine große Festigkeit und eine große Biegsamkeit.

Der Außenmantel 40, welcher ein hohes Elastizitätsmodul sowie eine hohe Bruchdehnung aufweist, ist seinerseits von einer Außenschicht 46 umgeben, die Kunststoff-, Gummi- und/oder metallische Bestandteile enthalten kann.

Das gesamte Versorgungskabel 10 besitzt im vorliegenden Fall einen Außendurchmesser von ca. 24 mm. Mit ihm kann durch den zentralen Durchgang 48 des Druckluftschlauches 12 (im vorliegenden Fall ein ½"-Schlauch) hindurch der Industrieroboter und/oder das an ihm vorhandene Werkzeug mit Druckluft versorgt werden. Zusätzlich können über die Lichtwellenleiter 20,22 Steuersignale geleitet werden. Über die in dem Versorgungskabel 10 vorhandenen verschiedenen elektrischen Leitungen 24,26,28,30,32 kann die zum Betrieb des Industrieroboters und/oder seines Werkzeuges benötigte elektrische Versorgungsspannung oder auch Steuerspannung geleitet werden.

Das Versorgungskabel 10 ist an einem Steckverbinder 50 angeschlossen, in dem es (Fig. 2) gradlinig hineingeführt ist. Das Gehäuse des Steckverbinders 50 besitzt ein Modul 52 für den Anschluss der elektrischen Leitungen 24,26,28,30,32, ein weiteres Modul 54 zum Anschluss der Lichtwellenleiter 20,22 und schließlich ein drittes Modul 56 für den Anschluss des zentralen Druckluftschlauches 12. Dieses Druckluft-Modul 56 ist zentral in dem Steckverbindergehäuse angeordnet, und ist außen von dem Lichtwellenleiter-Modul 54 und dem elektrischen Modul 52 umgeben. Diese beiden Module 52,54 liegen einander gegenüber.

Im Bereich des Gehäuses steckt der Mantel 14 des Druckluftschlauches 12 auf einem zentralen Rohr 58. Dieses Rohr 58 besitzt mehrere umlaufende zahnartige Vorsprünge 60, über die das Ende des Mantels 14 gezogen ist. Der Schlauch 12 sitzt damit luftdicht an dem Rohr 58 an.

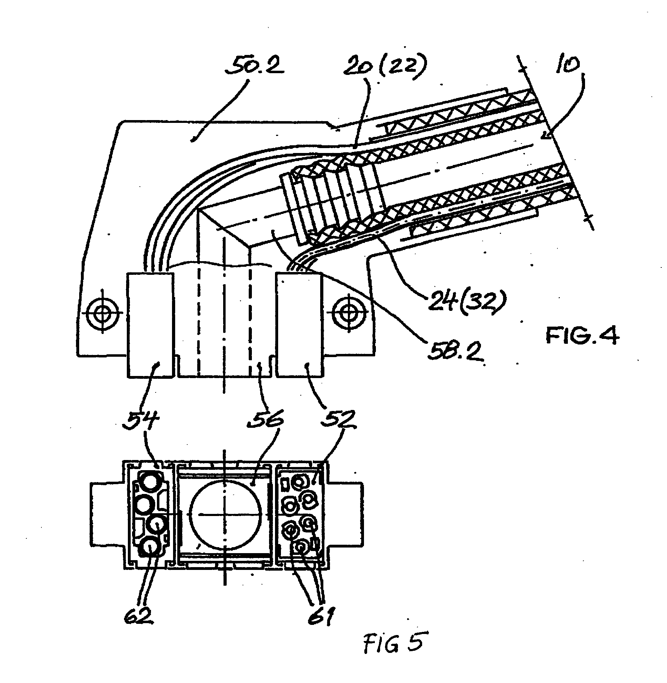

Die in Fig. 4 und 5 dargestellte Steckverbinder 50.2 unterscheidet sich vom Steckverbinder 50 dahingehend, dass das Versorgungskabel 10 winklig an dem Steckverbinder 50.2 angeschlossen ist. Auch der Steckverbinder 50.2 besitzt ein zentrales Druckluft-Modul 56, das in diesem Fall ein winkliges Rohr 58.2 zum Anschluss des Schlauches 12 besitzt. Das Druckluft-Modul 56 ist wiederum von einem elektrischen Modul 52 sowie einem Lichtwellenleiter-Modul 54 umgeben. Diese beiden Module 52,54 sind so angeordnet, dass die Lichtwellenleiter 20,22 in einem größeren Bogen als die elektrischen Leitungen 24,26,28,30,32 in die entsprechenden Module 54 bzw. 52 hineingeführt werden. Bei der Darstellung gemäß Fig. 4 sind die elektrischen Leitungen 24,26,28,30,32 innenliegend und die Lichtwellenleiter 20,22 außenliegend angeordnet. Diese Anordnung wird durch die umfangsmäßig gruppenweise verteilte Anordnung der Lichtwellenleiter 20,22 einerseits und der elektrischen Leitungen 24,26,28,30,32 andererseits auf einfache Weise ermöglicht.

In dem Modul 52 sind elektrische Kontaktelemente 61 und in dem Lichtwellenleiter-Modul 54 übliche Lichtwellenleiter-Kontaktelemente 62 vorhanden. Ein dem Steckverbinder 50 bzw. 50.2 entsprechender Gegen-Steckverbinder kann an den betreffenden Steckverbinder 50 bzw. 50.2 aufgesteckt werden und dadurch eine Leitungsverbindung zwischen einzelnen Leitungen des Versorgungskabels 10 mit einem vergleichbaren Versorgungskabel 10 geschaffen werden.

Durch die Steckverbinder sind gleichzeitig der Druckluftschlauch 12, die Lichtwellenleiter 20,22 und die elektrischen Leitungen 24,26,28,30,32 jeweils "leitend" miteinander gekoppelt.

### Bezugszeichenliste

- 10: Versorgungskabel
- 12: Fluid-Leitung, Druckluftschlauch
- 14: Mantel
- 16: Karkasse
- 18: Leitungskranz
- 20, 22: Lichtwellenleiter
- 24 - 32: elektrische Leitung
- 34: strangförmiger Füllkörper
- 36: Zwischenraum
- 40: Außenmantel
- 42: Bandagierung
- 44: Kunststofffaser-Geflecht
- 46: Außenschicht
- 48: Durchgang
- 50, 50.2: Steckverbinder
- 52: elektrisches Modul
- 54: Lichtwellenleiter-Modul
- 56: Druckluft-Modul
- 58, 58.2: Rohr
- 60: Vorsprung
- 61: elektrisches Kontaktelement
- 62: Lichtwellenleiter-Kontaktelement

## Patentansprüche

1. Versorgungskabel (10), insbesondere für einen Industrieroboter, welcher mit elektrischem Strom und mit einem Fluid als Arbeitsmedium versorgbar ist, und dessen eigene und/oder diejenigen Antriebs- und Versorgungssysteme, die für das an seiner Roboterhand vorhandene Werkzeug jeweils zur Verfügung stehen, mittels elektrischer Leitungen und/oder Lichtwellenleiter ansteuerbar sind, mit
• einer Fluid-Leitung (12),
• zumindest einer elektrischen Leitung (24,26,28,30,32),
• zumindest einem Lichtwellenleiter (20,22),
• zumindest einem zwischen der elektrischen Leitung (24,26,28,30,32) und dem Lichtwellenleiter (20,22) angeordneten strangförmigen Füllkörper (34).

2. Versorgungskabel (10) nach Anspruch 1,
**dadurch gekennzeichnet,**
**dass** die Fluid-Leitung (12) konzentrisch von einem Leitungskranz (18) umgeben ist, welcher die zumindest eine elektrische Leitung (24,26,28,30,32), den zumindest einen Lichtwellenleiter (20,22), und den zumindest einen strangförmigen Füllkörper (34) aufweist.

3. Versorgungskabel (10) nach Anspruch 2,
**dadurch gekennzeichnet,**
**dass** der Leitungskranz (18) von einer Schutzschicht (40,46) umgeben ist.

4. Versorgungskabel (10) nach Anspruch 2 oder 3,
**dadurch gekennzeichnet,**
**dass** die im Leitungskranz (18) vorhandenen Leitungen (20,22,24,26,28,30,32) etwa den gleichen Außendurchmesser besitzen.

5. Versorgungskabel (10) nach Anspruch 4,
**dadurch gekennzeichnet,**
**dass** der im Leitungskranz (18) vorhandene strangförmige Füllkörper (34) etwa den gleichen Außendurchmesser hat wie die im Leitungskranz (18) vorhandenen Leitungen (20,22,24,26,28,30,32).

6. Versorgungskabel (10) nach einem der Ansprüche 2 bis 5,
**dadurch gekennzeichnet,**
**dass** die eine oder die mehreren elektrischen Leitungen (24,26,28,30,32) dem einen oder den mehreren Lichtwellenleitern (20,22) auf dem Leitungskranz (18) umfangsmäßig gegenüberliegend angeordnet sind.

7. Versorgungskabel (10) nach einem der Ansprüche 2 bis 6,
**gekennzeichnet durch**
einen Außenmantel (40) mit einem hohen Elastizitätsmodul, einer hohen Festigkeit und einer hohen Bruchdehnung, welcher außen an der Kranzleitung (18) anliegt.

8. Versorgungskabel (10) nach Anspruch 7,
**dadurch gekennzeichnet,**
**dass** der Außenmantel (40) eine innere Schicht (42) aus einer Bandagierung besitzt, die von einem äußeren Stützgeflecht (44) und einer Außenschicht (46) umgeben ist.

9. Versorgungskabel (10) nach Anspruch 8,
**dadurch gekennzeichnet,**
**dass** die innere Schicht (42) aus einem Polyestervlies gebildet ist.

10. Versorgungskabel (10) nach Anspruch 8 oder 9,
**dadurch gekennzeichnet,**
**dass** das äußere Stützgeflecht (44) aus schraubenförmig angeordneten Kabeln gebildet ist.

11. Versorgungskabel (10) nach einem der Ansprüche 7 bis 10,
**dadurch gekennzeichnet,**
**dass** die Außenschicht (46) Kunststoff-, Gummi- und/oder metallische Bestandteile enthält.

12. Versorgungskabel (10) nach einem der Ansprüche 2 bis 11,
**dadurch gekennzeichnet,**
**dass** der Leitungskranz (18) fünf elektrische Leitungen (24,26,28,30,32), zwei bis vier Lichtwellenleiter (20,22) und jeweils zwischen diesen Leitungen vorhandene Füllkörper (34) enthält.

13. Versorgungskabel (10) nach Anspruch 12,
**dadurch gekennzeichnet,**
**dass** der Außendurchmesser der elektrischen Leitungen (24,26,28,30,32) jeweils 2,18 mm, der Außendurchmesser der Lichtwellenleiter (20,22) jeweils 2,20 mm und der Außendurchmesser der Füllkörper (34) jeweils ca. 2,20 mm beträgt.

14. Versorgungskabel (10) nach einem der Ansprüche 1 bis 12,
**dadurch gekennzeichnet,**
**dass** der Lichtwellenleiter (20,22) zumindest eine Kunststofffaser enthält.

15. Steckverbinder (50,50.2) zum Anschluss an ein Versorgungskabel (10) nach einem der Ansprüche 1 bis 14, mit einem Anschlussteil (52) für elektrische Leitungen (24,26,28,30,32), einem Anschlussteil (54) für Lichtwellenleiter (20,22) und einem Anschlussteil (56) für eine Fluid-Leitung (12), insbesondere Druckluft-Leitung, wobei das Versorgungskabel (10) in das Steckverbindergehäuse hinein- bzw. herausführbar ist.

16. Steckverbinder (50.2) nach Anspruch 15,
**dadurch gekennzeichnet,**
**dass** das die Leitungen (20,22,24,26,28,30,32) umfassende Versorgungskabel (10) derart winklig am Steckverbindergehäuse angeschlossen ist, dass die elektrischen Leitungen (24,26,28,30,32) im Steckverbindergehäuse einen kleineren Biegeradius aufweisen als Lichtwellenleiter (20,22).

17. Steckverbinder (50.2) nach Anspruch 15 oder 16,
**dadurch gekennzeichnet,**
**dass** die Anschlussteile (52,54,56) in das Steckverbindergehäuse einsetzbare Module sind, wobei ein erstes Modul (52) für elektrische Leitungen (24,26,28,30, 32), ein zweites Modul (54) für Lichtwellenleiter (20,22) und drittes Modul (56) für eine Fluid-Leitung (12), insbesondere Druckluft-Leitung, vorgesehen ist und wobei das dritte Modul (56) zwischen dem ersten Modul (52) und dem zweiten Modul (54) angeordnet ist.

18. Industrieroboter, welcher mit elektrischem Strom und einem Fluid als Arbeitsmedium versorgbar ist, und dessen eigene und/oder diejenigen Antriebs- und Versorgungssysteme, die für das an seiner Roboterhand vorhandene Werkzeug jeweils zur Verfügung stehen, mittels elektrischer Leitungen und/oder Lichtwellenleiter ansteuerbar sind, mit mit einem Versorgungskabel (10) nach einem der Ansprüche 1 bis 14.

19. Industrieroboter nach Anspruch 18, mit einem Steckverbinder (50,50.2) nach einem der Ansprüche 15 bis 17.
